# FASCICULE DE BREVET EUROPEEN

(11) **EP 4 179 185 B1**
(45) Date de publication et mention de la délivrance du brevet: **21.05.2025**
(21) Numéro de dépôt: 21746518.6
(22) Date de dépôt: 06.07.2021
(51) Int. Cl.: F01D 25/10, F01D 25/20

(54) **PROCEDE DE DEMARRAGE D'UN MOTEUR D'AERONEF**
STARTVERFAHREN FÜR EIN FLUGZEUGTRIEBWERK
START-UP METHOD FOR AN AIRCRAFT ENGINE

(30) Priorité: 09.07.2020 FR 2007261
(43) Date de publication de la demande: 17.05.2023
(73) Titulaire: Safran Helicopter Engines, 64510 Bordes (FR)
(72) Inventeur: SERGHINE, Camel, 77550 MOISSY-CRAMAYEL (FR); ROBERT, Olivier, 77550 MOISSY-CRAMAYEL (FR); KLONOWSKI, Thomas, 77550 MOISSY-CRAMAYEL (FR); SEVE Caroline Maud Léna, 77550 MOISSY- CRAMAYEL (FR)
(74) Mandataire: Cabinet Camus Lebkiri
(86) Numéro de dépôt international: PCT/FR2021/051241
(87) Numéro de publication internationale: WO 2022/008834

(56) Documents cités:
- US-A1- 2007 246 302
- US-A1- 2009 183 950
- US-A1- 2018 187 601
- US-B2- 7 690 205

## Description

### DOMAINE TECHNIQUE DE L'INVENTION

L'invention concerne le démarrage d'un moteur d'aéronef comme par exemple une turbine à gaz pour turbomoteur ou pour turbogénérateur. Le domaine d'application de l'invention est plus particulièrement celui des engins volants légers, notamment des hélicoptères.

### ARRIERE-PLAN TECHNOLOGIQUE DE L'INVENTION

Un moteur d'aéronef est habituellement couplé à un démarreur électrique. Pour le démarrage du moteur, le démarreur est alimenté en puissance électrique, par exemple à partir d'un groupe de parc ou d'une unité de puissance auxiliaire. Le démarreur fonctionne en moteur électrique et entraîne le moteur en rotation.

On sait que la viscosité de l'huile de lubrification d'un moteur augmente lorsque la température baisse. Ainsi, dans des conditions de froid extrême, par exemple pour une température inférieure à -40°C, l'huile présente une viscosité élevée, ce qui a pour conséquence un couple de démarrage du moteur élevé. On constate par essais qu'une part majeure dans le niveau absolu du couple résistant est celui engendré par la pompe à huile. En effet, elle doit faire transiter et mettre en pression une huile extrêmement visqueuse ce qui induit des pertes significatives, qui peuvent représenter jusqu'à 80% du couple résistant procurée par la turbine à gaz elle-même ainsi que ces équipements.

Le démarreur peut être dimensionné pour fournir un couple correspondant au couple de démarrage du moteur en conditions de froid extrême. Cependant, ce couple est significativement supérieur au couple de démarrage à température plus élevée. Ainsi, le démarrage par grand froid implique un surdimensionnement du démarreur et de son électronique de puissance, conduisant à une masse et à un encombrement importants. De plus, le groupe de parc doit être capable de fournir la puissance élevée nécessaire au démarrage.

On connaît du document FR-B1-2960592, un procédé de démarrage d'un moteur d'avion consistant à préchauffer l'huile avant de démarrer le moteur au moyen d'un démarreur. Plus particulièrement, si la température mesurée est inférieure à un seuil de température déterminé, par exemple -15°C, des conditions givrantes sont signalées en allumant un voyant lumineux sur le tableau de bord. Ceci indique au pilote que le préchauffage de l'huile du moteur est demandé. Le pilote peut alors générer un ordre de préchauffage consistant à commander le démarreur pour entrainer le moteur en rotation, à une faible vitesse. Par exemple, le moteur est entrainé à une vitesse qui est comprise entre 8% et 12% de son régime de moulinet (« windmill » en anglais). Ainsi, le couple que doit fournir le démarreur est maitrisé. En raison des pertes thermiques du démarreur, la température de l'huile augmente progressivement. Les pertes thermiques de paliers des enceintes moteur et, dans une moindre mesure, dans le boîtier à engrenages, contribuent également à l'augmentation de la température de l'huile. Ainsi, le couple résistif moteur diminue progressivement. Cette étape pendant laquelle le moteur est entraîné à faible vitesse constitue donc une étape de préchauffage de l'huile, qui peut durer par exemple entre 8 et 10 minutes.

Même si du fait de la faible rotation du moteur, la pression de l'huile est diminuée, elle est toujours présente, elle induit des pertes significatives et nécessite la mise en œuvre d'un démarreur surdimensionné. En outre, cette mise en œuvre optimise le démarrage uniquement par temps froid.

Le document US 2007/246302 A divulgue un autre procédé de préchauffage d'un réservoir d'huile de moteur.

En outre, une telle solution de préchauffage de l'huile pour diminuer sa viscosité, et donc les pertes mécaniques, n'est pas adaptée pour les hélicoptères. En effet, lors de certaines interventions spécifiques, par exemple une opération de secours en montagne par température négative, le pilote ne possède pas le temps nécessaire pour préchauffer l'huile avant de réaliser le démarrage.

### RESUME DE L'INVENTION

L'invention apporte une solution technique aux problèmes techniques évoqués précédemment en permettant de démarrer un moteur d'aéronef dans des conditions optimales quelle que soit la température de l'huile et permet en outre d'équiper un aéronef d'un démarreur non surdimensionné.

Dans ce contexte, un aspect de l'invention se rapporte ainsi, dans son acceptation la plus large, à un procédé de démarrage d'un moteur d'aéronef dans lequel ledit moteur est couplé à un circuit de lubrification comportant notamment un système de pompe à huile, ledit circuit de lubrification étant construit et agencé pour faire circuler de l'huile dans ledit moteur, et dans lequel un mode de fonctionnement du moteur comporte un mode arrêt et un mode veille correspondant à un régime de rotation faible, ledit procédé de démarrage étant caractérisé en ce qu'il comporte, pendant une phase de démarrage, les étapes de :
- mesurer une température d'huile, ladite étape de mesurer étant réalisée par un dispositif de détection de température ;
- fonction de ladite température mesurée, comparée à une température seuil, et fonction du mode de fonctionnement dudit moteur, sélectionner un profil de débit d'huile de démarrage à appliquer dans ledit moteur parmi différents profils de débit d'huile de démarrage, ladite étape de sélectionner étant réalisée par un calculateur ;
- appliquer ledit profil de débit d'huile de démarrage sélectionné au moyen dudit système de pompe à huile, ledit système de pompe à huile étant piloté par ledit calculateur.

Grâce au procédé de démarrage d'un moteur d'aéronef selon cet aspect de l'invention, il est possible, lors du démarrage, de sélectionner un profil de débit d'huile fonction de la température de l'huile. Par exemple, si la température de l'huile est faible, il est possible de sélectionner sur une courte période, un débit d'huile nul afin de supprimer les pertes engendrées par l'huile déplacée au moyen du système de pompe à huile. On entend par courte période, une période inférieure au temps de démarrage nominal (pour la température considérée), et qui ne dégrade pas la fiabilité mécanique globale. Une courte période peut par exemple être inférieure à 10 secondes.

Ces caractéristiques permettent de ne pas équiper les aéronefs, et plus particulièrement les hélicoptères, d'un démarreur surdimensionné. A l'inverse, lorsque la température de l'huile est élevée, il est possible de sélectionner un débit d'huile important de manière à lubrifier au maximum, par exemple, les paliers à huile en phase de démarrage. Outre les caractéristiques qui viennent d'être évoquées dans le paragraphe précédent, le procédé de démarrage d'un moteur d'aéronef selon cet aspect de l'invention peut présenter une ou plusieurs caractéristiques complémentaires parmi les suivantes, considérées individuellement ou selon toutes les combinaisons techniquement possibles.

Selon un aspect de l'invention, chaque profil de débit d'huile comporte une première phase et une deuxième phase, ladite deuxième phase correspondant à une pression d'huile prédéterminée à l'entrée du moteur, appliquée lorsque le régime du moteur atteint une valeur de régime seuil.

Selon un aspect de l'invention, si la température d'huile mesurée est inférieure à la température seuil et si le mode de fonctionnement du moteur est le mode arrêt, le profil de débit d'huile comporte :
- une première phase au cours de laquelle la pression d'huile à l'entrée du moteur est nulle jusqu'à ce que le régime du moteur atteigne un régime seuil ;
- une deuxième phase au cours de laquelle la pression d'huile à l'entrée du moteur est égale à une valeur de pression d'huile limite.

Selon un aspect de l'invention, si la température d'huile mesurée est supérieure à la température seuil, et si le mode de fonctionnement du moteur est le mode veille le profil de débit d'huile comporte :
- une première phase au cours de laquelle la pression d'huile à l'entrée du moteur est égale à une valeur de pression d'huile limite jusqu'à ce que le régime du moteur atteigne un régime seuil ;
- une deuxième phase au cours de laquelle la pression d'huile à l'entrée du moteur est égale à une valeur de pression d'huile seuil, ladite valeur de pression d'huile seuil étant inférieure à ladite valeur de pression d'huile limite.

Selon un aspect de l'invention, si la température d'huile est supérieure à la température seuil et si le mode de fonctionnement du moteur est le mode arrêt, le profil de débit d'huile comporte :
- une première phase au cours de laquelle la pression d'huile à l'entrée du moteur est croissante jusqu'à ce que le régime du moteur atteigne un régime seuil ;
- une deuxième phase au cours de laquelle la pression d'huile à l'entrée du moteur est égale à une valeur de pression d'huile limite.

Un autre aspect de l'invention se rapporte à un aéronef comprenant :
- un moteur dont le mode de fonctionnement comporte un mode arrêt et un mode veille correspondant à un régime de rotation faible; et
- un dispositif de détection de température construit et agencé pour mesurer une température d'huile ;
ledit aéronef mettant en œuvre le procédé ci-dessus et comportant :
- un calculateur construit et agencé pour, fonction de ladite température mesurée, sélectionner un profil de débit d'huile de démarrage à appliquer dans ledit moteur parmi différents profils de débit d'huile de démarrage ;
- un circuit de lubrification comportant notamment un système de pompe à huile, ledit système de pompe à huile étant construit et agencé pour appliquer ledit profil de débit d'huile de démarrage sélectionné.

Selon, un aspect de l'invention, le système de pompe à huile comporte une pompe à huile à cylindrée variable.

Selon, un aspect de l'invention, le système de pompe à huile comporte une pompe à huile et un électro-clapet, ledit électro-clapet étant situé en aval de ladite pompe à huile et étant construit et agencé pour rediriger tout ou partie du débit d'huile en sortie de ladite pompe à huile dans un réservoir.

Selon, un aspect de l'invention, le système de pompe à huile comporte une pompe à huile et un dispositif de découplage mécanique construit et agencé pour activer ou désactiver la rotation de la pompe à huile.

Selon, un aspect de l'invention, le système de pompe à huile comporte une pompe à huile assistée en rotation par une machine électrique tournante.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
[Fig. 1] illustre de façon schématique un procédé de démarrage d'un moteur d'aéronef selon un aspect de l'invention.
[Fig. 2] illustre de façon schématique un premier exemple de profil de débit d'huile selon un aspect de l'invention.
[Fig. 3] illustre de façon schématique un deuxième exemple de profil de débit d'huile selon un aspect de l'invention.
[Fig. 4] illustre de façon schématique un troisième exemple de profil de débit d'huile selon un aspect de l'invention.
[Fig. 5] illustre de façon schématique un moteur d'aéronef selon un premier aspect de l'invention.
[Fig. 6] illustre de façon schématique un moteur d'aéronef selon un deuxième aspect de l'invention.
[Fig. 7] illustre de façon schématique un moteur d'aéronef selon un troisième aspect de l'invention.
[Fig. 8] illustre de façon schématique un moteur d'aéronef selon un quatrième aspect de l'invention.
[Fig. 9] est un logigramme illustrant la sélection du profil de débit d'huile en fonction de la température de l'huile et du mode de fonctionnement du moteur.

### DESCRIPTION DETAILLEE

Sauf précision contraire, un même élément apparaissant sur des figures différentes présente une référence unique.

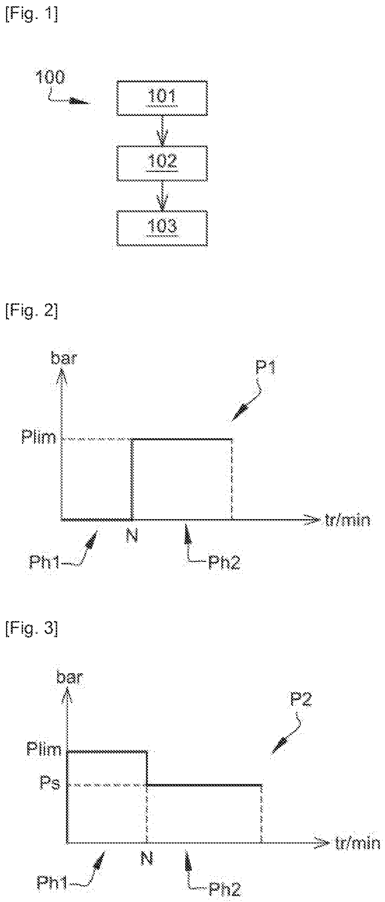

La figure 1 illustre un procédé de démarrage 100 d'un moteur d'aéronef conforme à un aspect de l'invention. Le moteur, ou turbomoteur, est couplé à un circuit de lubrification comportant notamment un système de pompe à huile, le circuit de lubrification étant construit et agencé pour faire circuler de l'huile dans le moteur.

Lorsque l'aéronef est au sol et que le moteur est à l'arrêt ou en veille, le procédé de démarrage 100 comporte une étape 101 de mesurer une température d'huile, l'étape 101 de mesurer étant réalisée par un dispositif de détection de température, par exemple un capteur de température.

Fonction de la température mesurée à l'étape 101, le procédé de démarrage 100 comporte une étape 102 de sélectionner un profil de débit d'huile de démarrage à appliquer dans le moteur, l'étape 102 de sélection étant réalisée par un calculateur. L'étape de sélection 102 est réalisée en fonction, d'une part, de la température d'huile mesurée et, d'autre part, d'un mode de fonctionnement du moteur. La sélection en fonction de la température d'huile mesurée est effectuée par comparaison avec une température seuil. Le mode de fonctionnement du moteur peut être un mode veille ou un mode arrêt.

Par exemple, lorsque l'aéronef est au sol, que le moteur est à l'arrêt et que le capteur de température détecte une température d'huile inférieure à un seuil de température déterminé, par exemple -15°C, un profil de débit d'huile de démarrage correspondant à des conditions de froid extrême est sélectionné.

La figure 2 illustre un exemple de profil de débit d'huile P1 adapté aux conditions de froid extrême. On entend par « froid extrême » des conditions telles que la température d'huile du moteur est inférieure à la température seuil, la température d'huile découlant du mode de fonctionnement du moteur. Ce profil P1 est sélectionné lors de l'étape 102 de sélection d'un profil de débit d'huile si la température d'huile mesurée est inférieure à la température seuil et si le mode de fonctionnement du moteur est en mode arrêt. Le profil de débit d'huile P1 peut être sélectionné lorsque la température d'huile est inférieure à -15°C.

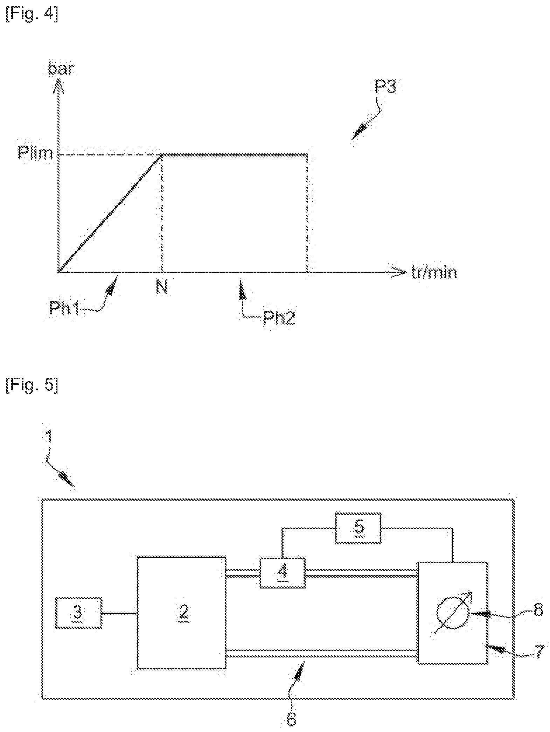

Sur la figure 2, comme sur les figures 3 et 4, l'axe des ordonnées illustre la pression de l'huile et l'axe des abscisses représente le régime moteur.

Dans ce cas, le profil de débit d'huile P1 comporte une première phase Ph1 au cours de laquelle la pression de l'huile à l'entrée du moteur est nulle jusqu'à ce que le régime du moteur atteigne un régime seuil N. En considérant un régime nominal fixé à 100 %, le régime seuil N peut par exemple être égal à 10 - 50 % du régime nominal.

A l'issue de la première phase Ph1, le profil de débit d'huile P1 comporte une deuxième phase Ph2 au cours de laquelle la pression de l'huile à l'entrée du moteur est égale à une valeur de pression limite Plim. Cette pression limite Plim peut être, par exemple, de l'ordre de 5 bars.

Afin d'obtenir une pression d'huile nulle à l'entrée du moteur, il est possible de piloter différents types de système de pompe à huile.

Le procédé de démarrage 100 comporte à cette fin une étape 103 d'appliquer le profil de débit d'huile de démarrage sélectionné au moyen du système de pompe à huile, le système de pompe à huile étant piloté par le calculateur.

Selon un aspect de l'invention, le profil de débit d'huile de démarrage sélectionné est appliqué au moyen d'un système de pompe à huile comportant une pompe à huile à cylindrée variable. Une telle pompe à huile à cylindrée variable permet d'ajuster le débit en sortie du système de pompe à huile, voire son annulation, par le déplacement par un actionneur piloté permettant de réduire l'excentricité du rotor de la pompe par rapport au stator de la pompe. Une telle technologie est connue sous la dénomination pompe à palettes.

Ainsi, il est possible d'appliquer un débit d'huile nul dans le circuit de lubrification et par conséquent de supprimer les pertes significatives générées par l'huile visqueuse, qui peuvent représenter jusqu'à 80% du couple résistant procuré par le moteur lui-même ainsi que ces équipements.

Selon un autre aspect de l'invention, le profil de débit d'huile de démarrage sélectionné est appliqué au moyen d'un système de pompe à huile comportant une pompe à huile, un électro-clapet et un réservoir. L'électro-clapet est situé en aval de la pompe à huile et est construit et agencé pour rediriger tout ou partie du débit d'huile en sortie de la pompe à huile dans le réservoir sans que l'huile ne soit mise en pression.

Selon un autre aspect de l'invention, le profil de débit d'huile de démarrage sélectionné est appliqué au moyen d'un système de pompe à huile comportant une pompe à huile et un dispositif de découplage mécanique construit et agencé pour activer ou désactiver la rotation de la pompe à huile. Ce moyen de découplage mécanique peut être, par exemple, un crabot ou un embrayage permettant d'actionner ou non la rotation de la pompe à huile.

La figure 3 illustre un exemple de profil de débit d'huile P2 adapté aux températures élevées et aux phases de fonctionnement de type veille du moteur. On entend par « températures élevées » des températures d'huile supérieures à la température seuil découlant du mode de fonctionnement du moteur. Le profil P2 est sélectionné lors de l'étape 102 de sélection d'un profil de débit d'huile si la température d'huile mesurée est supérieure à la température seuil et lorsque le mode de fonctionnement du moteur est en mode veille.

Le mode de veille moteur est caractérisé par un régime de rotation faible. Une pression d'huile élevée permet de fonctionner pendant une longue durée sur des zones de régime dites « critiques » d'un point de vue vibratoire (généralement entre 10 et 30% du régime nominal du turbomoteur). Lors de cette phase de fonctionnement, il est possible d'adapter le profil pour d'autres fonctions comme priviligier la pression pour l'amortissement des modes vibratoires.

Les dispositifs d'amortissement à huile équipant les lignes d'arbres du turbomoteur nécessitent en effet un niveau minimal de pression d'huile. Grâce à l'invention, de manière à optimiser le comportement vibratoire lors d'une phase de fonctionnement de type veille moteur, une pression supérieure au nominal est privilégiée. Une fois passée cette phase de fonctionnement, il est possible d'alimenter ces dispositifs d'amortissement à une pression inférieure.

Ce type de profil de débit d'huile P2 est également adapté aux pompes volumétriques, pour lesquelles le débit d'huile est imposé par le régime moteur.

Dans ce cas, le profil de débit d'huile P2 sélectionné lors de l'étape 102 comporte une première phase Ph1 au cours de laquelle la pression du débit d'huile est égale à une valeur de pression d'huile limite Plim jusqu'à ce que le régime du moteur atteigne un régime seuil N. Durant cette phase, l'alimentation en huile des systèmes d'amortissement peut être optimisée.

A l'issu de la première phase Ph1, le profil de débit d'huile P2 comporte une deuxième phase Ph2 au cours de laquelle la pression d'huile est égale à une valeur de pression d'huile seuil Ps. La valeur de pression d'huile seuil Ps est inférieure à la valeur de pression d'huile limite Plim. Cette pression seuil Ps peut être, par exemple, de l'ordre 3 bars.

Autrement dit, ce profil de débit d'huile P2 est choisi lorsque le moteur est en veille et non arrêté totalement. Le turbomoteur est en état de veille par exemple dans l'un des deux cas suivants :
- La chambre de combustion est éteinte et le turbomoteur est entrainé à bas régime : la pompe à huile fonctionne alors sur un point de fonctionnement donné, caractérisé par le plateau de pression de la phase Ph1 du profil P2 ;
- La chambre de combustion est allumée et le turbomoteur possède un régime positionné bas, qui peut être autonome ou assisté électriquement : la pompe à huile fonctionne alors sur un point de fonctionnement donné, caractérisé par le plateau de pression de la phase Ph1 du profil P2.

Dans les deux cas, si un redémarrage du turbomoteur initialement dans son mode de veille est requis, le point de fonctionnement de la pompe à huile va se déplacer le long du plateau de pression de la phase Ph1 jusqu'au régime de seuil N puis se positionner sur le plateau de pression de la phase Ph2 qui est un plateau de pression régulée et déterminée. Pendant la phase Ph1, l'alimentation des organes d'amortissement est convenable et le refroidissement des zones chaudes dites critiques est amélioré car, en mode de veille, la chambre peut être allumée ou très récemment éteinte (transitoire thermique présent). À la fin du démarrage, c'est-à-dire lorsque le régime N devient supérieur à un régime seuil, la pression d'huile passe sur un plateau de pression Ps suffisant.

En d'autres termes, ce profil de débit d'huile P2 permet par exemple d'alimenter activement en huile certains organes critiques du moteur dès le début de la phase de démarrage pour permettre un fonctionnement optimal. Il permet en outre dans une seconde phase du mode veille du moteur d'adapter le besoin en huile.

Le profil de débit d'huile P2 sélectionné est ensuite appliqué lors de l'étape 103 au moyen du système de pompe à huile.

Tout comme le profil de débit d'huile P1, le profil de débit d'huile P2 peut être appliqué au moyen du système de pompe à huile comportant une pompe à huile à cylindrée variable.

De même, le profil de débit d'huile de démarrage P2 sélectionné peut être appliqué au moyen d'un système de pompe à huile comportant une pompe à huile, un électro-clapet et un réservoir. L'électro-clapet est situé en aval de la pompe à huile et est construit et agencé pour rediriger tout ou partie du débit d'huile en sortie de la pompe à huile dans le réservoir tout en maitrisant le niveau de pression cible en entrée moteur, d'une valeur nulle à une valeur prédéfinie.

Dans une mise en œuvre différente, le profil de débit d'huile de démarrage P2 sélectionné peut être appliqué au moyen d'un système de pompe à huile comportant une pompe à huile et une machine électrique tournante construite et agencée pour assister en rotation la pompe à huile. Cette machine électrique annexe est entièrement pilotable par le calculateur en couple et en vitesse en fonction du besoin.

La figure 4 illustre un exemple de profil de débit d'huile P3 permettant de conserver les performances optimales du moteur tout en ne nécessitant pas un démarreur surdimensionné. Le profil de débit d'huile P3 est sélectionné lors de l'étape 102 de sélection d'un profil de débit d'huile si la température d'huile mesurée est supérieure à la température seuil et si le mode de fonctionnement du moteur est le mode arrêt.

Dans ce cas, le profil de débit d'huile P3 comporte une première phase Ph1 au cours de laquelle la pression d'huile est croissante jusqu'à ce que le régime du moteur atteigne un régime seuil N.

A l'issu de la première phase Ph1, le profil de débit d'huile P3 comporte une deuxième phase Ph2 au cours de laquelle la pression d'huile à l'entrée du moteur est égale à une valeur pression d'huile limite Plim.

Le profil de débit d'huile P3 sélectionné est ensuite appliqué lors de l'étape 103 au moyen du système de pompe à huile.

Tout comme le profil de débit d'huile P1, le profil de débit d'huile P3 peut être appliqué au moyen du système de pompe à huile comportant :
- une pompe à huile à cylindrée variable, ou
- une pompe à huile, un électro-clapet et un réservoir.

En outre, le profil de débit d'huile P3 peut être appliqué au moyen du système de pompe à huile comportant une pompe à huile et une machine électrique tournante construite et agencée pour assister en rotation la pompe à huile.

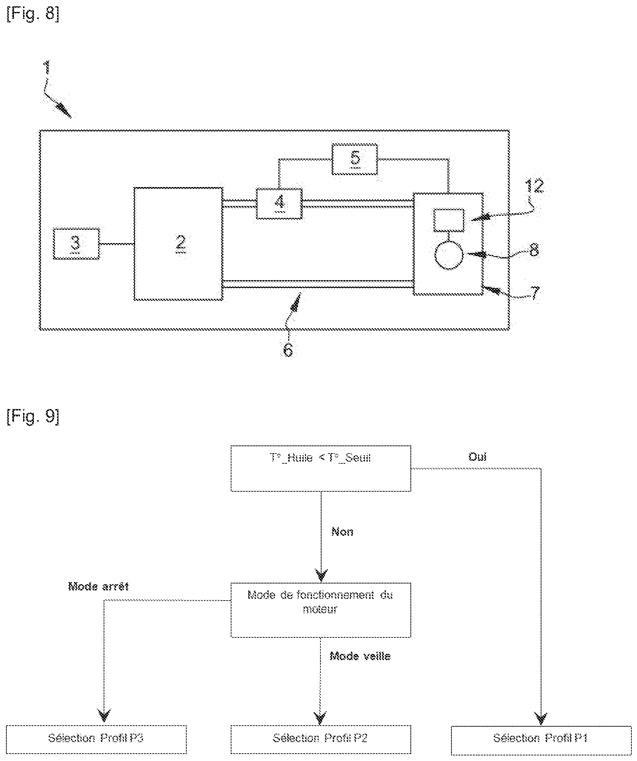

La figure 9 est un logigramme illustrant l'étape 102 de sélection du profil de débit d'huile P1, P2, P3 en fonction :
- de la température de l'huile par rapport à la température seuil, et
- du mode de fonctionnement du moteur.

Si la température de l'huile est inférieure à la température seuil, alors le moteur est en mode arrêt et le profil P1 est sélectionné. Si la température de l'huile est supérieure à la température seuil, alors le profil de débit d'huile sélectionné sera soit le profil de débit d'huile P2 soit le profil de débit d'huile P3. Le profil de débit d'huile P2 est sélectionné si le moteur est en mode veille. Le profil P3 est sélectionné si le moteur est en mode arrêt.

La figure 5 illustre un aéronef conforme à un premier aspect de l'invention. L'aéronef 1 comporte un turbomoteur 2 couplé mécaniquement à un démarreur électrique 3. L'aéronef 1 comporte :
- un dispositif de détection de température 4 construit et agencé pour mesurer une température d'huile ;
- un calculateur 5 construit et agencé pour, fonction de la température mesurée, sélectionner un profil de débit d'huile de démarrage à appliquer dans le moteur 2 ;
- un circuit de lubrification 6 comportant notamment un système de pompe à huile 7, le système de pompe à huile 7 étant construit et agencé pour appliquer le profil de débit d'huile de démarrage sélectionné.

Dans l'exemple illustré à la figure 5, le système de pompe à huile 7 comporte une pompe à huile à cylindrée variable 8 entrainée mécaniquement par le turbomoteur 2 via une boite d'accessoires non illustrée.

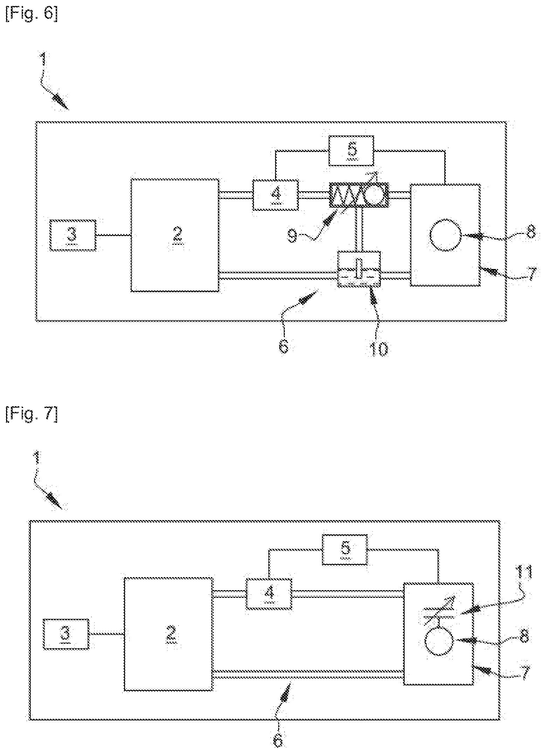

Dans l'exemple illustré à la figure 6, le système de pompe à huile 7 comporte une pompe à huile 8 qui est entrainée mécaniquement par le turbomoteur 2 via une boite d'accessoires non illustrée, un électro-clapet 9 et un réservoir 10. L'électro-clapet 9 est situé en aval de la pompe à huile 8 et est construit et agencé pour rediriger tout ou partie du débit d'huile en sortie de la pompe à huile 8 dans le réservoir 10.

Dans l'exemple illustré à la figure 7, le système de pompe à huile 7 comporte une pompe à huile 8 qui est entrainée mécaniquement par le turbomoteur 2 via une boite d'accessoires non illustrée, et un dispositif de découplage mécanique 11. La pompe à huile 8 est associée au dispositif de découplage mécanique 11 qui est construit et agencé pour activer ou désactiver la rotation de la pompe à huile 8.

Dans l'exemple illustré à la figure 8, le système de pompe à huile 7 comporte une pompe à huile 8 et une machine électrique tournante 12. La pompe à huile 8 est par conséquent assistée en rotation par la machine électrique tournante 12.

Bien entendu, les aspects de l'invention présentés ci-dessus ne sont pas limitatifs. Il est par exemple évident que l'homme du métier est en mesure de proposer différents profils de débit d'huile et différents systèmes de pompe à huile construits et agencés pour appliquer des profils de débit d'huile différents.

## Revendications

1. Procédé de démarrage (100) d'un moteur (2) d'aéronef dans lequel ledit moteur (2) est couplé à un circuit de lubrification (6) comportant notamment un système de pompe à huile (7), ledit circuit de lubrification (6) étant construit et agencé pour faire circuler de l'huile dans ledit moteur (2), et dans lequel un mode de fonctionnement du moteur (2) comporte un mode arrêt et un mode veille correspondant un régime de rotation faible , ledit procédé de démarrage (100) étant **caractérisé en ce qu'**il comporte, pendant une phase de démarrage, les étapes de :
- mesurer (101) une température d'huile, ladite étape de mesurer (101) étant réalisée par un dispositif de détection de température (4) ;
- fonction de ladite température mesurée, comparée à une température seuil, et fonction du mode de fonctionnement dudit moteur, sélectionner (102) un profil de débit d'huile de démarrage (P1, P2, P3) à appliquer dans ledit moteur (2) parmi différents profils de débit d'huile de démarrage, ladite étape de sélectionner (102) étant réalisée par un calculateur (5) ;
- appliquer (103) ledit profil de débit d'huile de démarrage (P1, P2, P3) sélectionné au moyen dudit système de pompe à huile (7), ledit système de pompe à huile (7) étant piloté par ledit calculateur (5).

2. Procédé de démarrage (100) d'un moteur (2) d'aéronef selon la revendication 1, **caractérisé en ce que** chaque profil de débit d'huile (P1, P2, P3) comporte une première phase (Ph1) et une deuxième phase (Ph2), ladite deuxième phase (Ph2) correspondant à une pression d'huile prédéterminée à l'entrée du moteur, appliquée lorsque le régime du moteur atteint une valeur de régime seuil (N).

3. Procédé de démarrage (100) d'un moteur (2) d'aéronef selon la revendication 1 ou 2, **caractérisé en ce que** si la température d'huile mesurée est inférieure à la température seuil et si le mode de fonctionnement du moteur (2) est le mode arrêt, le profil de débit d'huile (P1) comporte :
- une première phase (Ph1) au cours de laquelle la pression d'huile à l'entrée du moteur (2) est nulle jusqu'à ce que le régime du moteur (2) atteigne un régime seuil (N) ;
- une deuxième phase (Ph2) au cours de laquelle la pression d'huile à l'entrée du moteur (2) est égale à une valeur de pression d'huile limite (Plim).

4. Procédé de démarrage (100) d'un moteur (2) d'aéronef selon la revendication 1 ou 2, **caractérisé en ce que** si la température d'huile mesurée est supérieure à la température seuil et si le mode de fonctionnement du moteur (2) est le mode veille, le profil de débit d'huile (P2) comporte :
- une première phase (Ph1) au cours de laquelle la pression d'huile à l'entrée du moteur (2) est égale à une valeur de pression d'huile limite (Plim) jusqu'à ce que le régime du moteur (2) atteigne un régime seuil (N) ;
- une deuxième phase (Ph2) au cours de laquelle la pression d'huile à l'entrée du moteur (2) est égale à une valeur de pression d'huile seuil (Ps), ladite valeur de pression d'huile seuil (Ps) étant inférieure à ladite valeur de pression d'huile limite (Plim).

5. Procédé de démarrage (100) d'un moteur (2) d'aéronef selon la revendication 1 ou 2, **caractérisé en ce que** si la température d'huile mesurée est supérieure à la température seuil et si le mode de fonctionnement du moteur (2) est le mode arrêt, le profil de débit d'huile (P3) comporte :
- une première phase (Ph1) au cours de laquelle la pression d'huile à l'entrée du moteur (2) est croissante jusqu'à ce que le régime du moteur (2) atteigne un régime seuil (N) ;
- une deuxième phase (Ph2) au cours de laquelle la pression d'huile à l'entrée du moteur (2) est égale à une valeur de pression d'huile limite (Plim).

6. Aéronef (1) comprenant un moteur (2) dont le mode de fonctionnement comporte un mode arrêt et un mode veille correspondant un régime de rotation faible et un dispositif de détection de température (4) construit et agencé pour mesurer une température d'huile, ledit aéronef (1) étant **caractérisé en ce qu'**il met en œuvre le procédé selon l'une quelconque des revendications 1 à 5 et qu'il comporte:
- un calculateur (5) construit et agencé pour, fonction de ladite température mesurée, sélectionner un profil de débit d'huile de démarrage (P1, P2, P3) à appliquer dans ledit moteur (2) parmi différents profils de débit d'huile de démarrage ;
- un circuit de lubrification (6) comportant notamment un système de pompe à huile (7), ledit système de pompe à huile (7) étant construit et agencé pour appliquer ledit profil de débit d'huile de démarrage (P1, P2, P3) sélectionné.

7. Aéronef (1) selon la revendication précédente **caractérisé en ce que** le système de pompe à huile (7) comporte une pompe à huile (8) à cylindrée variable.

8. Aéronef (1) selon la revendication 6 **caractérisé en ce que** le système de pompe à huile (7) comporte une pompe à huile (8) et un électro-clapet (9), ledit électro-clapet (9) étant situé en aval de ladite pompe à huile (8) et étant construit et agencé pour rediriger tout ou partie du débit d'huile en sortie de ladite pompe à huile (8) dans un réservoir (10).

9. Aéronef (1) selon la revendication 6 **caractérisé en ce que** le système de pompe à huile (7) comporte une pompe à huile (8) et un dispositif de découplage mécanique (11) construit et agencé pour activer ou désactiver la rotation de la pompe à huile (8).

10. Aéronef selon la revendication 6 **caractérisé en ce que** le système de pompe à huile (7) comporte une pompe à huile (8) assistée en rotation par une machine électrique tournante (12).

## Patentansprüche

1. Verfahren zum Starten (100) eines Triebwerks (2) eines Luftfahrzeugs, bei dem das Triebwerk (2) mit einem Schmierkreislauf (6) gekoppelt ist, der insbesondere ein Ölpumpensystem (7) umfasst, wobei der Schmierkreislauf (6) so gestaltet und angeordnet ist, dass Öl in dem Triebwerk (2) zirkuliert, und bei dem ein Betriebsmodus des Triebwerks (2) einen Stoppmodus und einen Bereitschaftsmodus umfasst, die einer niedrigen Drehzahl entsprechen, wobei das Startverfahren (100) **dadurch gekennzeichnet ist, dass** es während einer Startphase die folgenden Schritte umfasst:
- Messen (101) einer Öltemperatur, wobei der Schritt des Messens (101) von einer Temperaturerfassungsvorrichtung (4) durchgeführt wird;
- in Abhängigkeit von der gemessenen Temperatur, die mit einer Schwellentemperatur verglichen wird, und in Abhängigkeit vom Betriebsmodus des Triebwerks, Auswählen (102) eines Öldurchflussprofils (P1, P2, P3) beim Starten, das im Triebwerk (2) angewendet werden soll und aus verschiedenen Öldurchflussprofilen für das Starten ausgewählt wird, wobei der Schritt des Auswählens (102) durch einen Rechner (5) durchgeführt wird;
- Anwenden (103) des ausgewählten Öldurchflussprofils (P1, P2, P3) für das Starten mittels des Ölpumpensystems (7), wobei das Ölpumpensystem (7) durch den Rechner (5) gesteuert wird.

2. Verfahren zum Starten (100) eines Triebwerks (2) eines Luftfahrzeugs nach Anspruch 1, **dadurch gekennzeichnet, dass** jedes Öldurchflussprofil (P1, P2, P3) eine erste Phase (Ph1) und eine zweite Phase (Ph2) umfasst, wobei die zweite Phase (Ph2) einem vorbestimmten Öldruck am Einlass des Triebwerks entspricht, der angewendet wird, wenn die Drehzahl des Triebwerks einen Schwellenwert (N) für die Drehzahl erreicht.

3. Verfahren zum Starten (100) eines Triebwerks (2) eines Luftfahrzeugs nach Anspruch 1 oder 2, **dadurch gekennzeichnet, dass**, wenn die gemessene Öltemperatur unter der Schwellentemperatur liegt und wenn der Betriebsmodus des Triebwerks (2) der Stoppmodus ist, das Öldurchflussprofil (P1) Folgendes umfasst:
- eine erste Phase (Ph1), in der der Öldruck am Einlass des Triebwerks (2) null ist, bis die Drehzahl des Triebwerks (2) eine Schwellendrehzahl (N) erreicht;
- eine zweite Phase (Ph2), in der der Öldruck am Einlass des Triebwerks (2) gleich einem Grenzwert für den Öldruck (Plim) ist.

4. Verfahren zum Starten (100) eines Triebwerks (2) eines Luftfahrzeugs nach Anspruch 1 oder 2, **dadurch gekennzeichnet, dass**, wenn die gemessene Öltemperatur über der Schwellentemperatur liegt und der Betriebsmodus des Triebwerks (2) der Bereitschaftsmodus ist, das Öldurchflussprofil (P2) Folgendes umfasst:
- eine erste Phase (Ph1), in der der Öldruck am Einlass des Triebwerks (2) gleich einem Grenzwert für den Öldruck (Plim) ist, bis die Drehzahl des Triebwerks (2) eine Schwellendrehzahl (N) erreicht;
- eine zweite Phase (Ph2), in der der Öldruck am Einlass des Triebwerks (2) gleich einem Schwellenwert für den Öldruck (Ps) ist, wobei der Schwellenwert für den Öldruck (Ps) kleiner als der Grenzwert für den Öldruck (Plim) ist.

5. Verfahren zum Starten (100) eines Triebwerks (2) eines Luftfahrzeugs nach Anspruch 1 oder 2, **dadurch gekennzeichnet, dass**, wenn die gemessene Öltemperatur über der Schwellentemperatur liegt und wenn der Betriebsmodus des Triebwerks (2) der Stoppmodus ist, das Öldurchflussprofil (P3) umfasst:
- eine erste Phase (Ph1), in der der Öldruck am Einlass des Triebwerks (2) ansteigt, bis die Drehzahl des Triebwerks (2) eine Schwellendrehzahl (N) erreicht;
- eine zweite Phase (Ph2), in der der Öldruck am Einlass des Triebwerks (2) gleich einem Grenzwert für den Öldruck (Plim) ist.

6. Luftfahrzeug (1) mit einem Triebwerk (2), dessen Betriebsmodus einen Stoppmodus und einen Bereitschaftsmodus entsprechend einer niedrigen Drehzahl aufweist, und mit einer Temperaturerfassungsvorrichtung (4), die zum Messen einer Öltemperatur gestaltet und angeordnet ist, wobei das Luftfahrzeug (1) **dadurch gekennzeichnet ist, dass** es das Verfahren nach einem der Ansprüche 1 bis 5 durchführt und Folgendes umfasst:
- einen Rechner (5), der so gestaltet und angeordnet ist, dass er in Abhängigkeit von der gemessenen Temperatur aus verschiedenen Öldurchflussprofilen beim Starten ein Öldurchflussprofil (P1, P2, P3) für das Starten auswählt, das in dem Triebwerk (2) angewendet werden soll;
- einen Schmierkreislauf (6), der insbesondere ein Ölpumpensystem (7) umfasst, wobei das Ölpumpensystem (7) so gestaltet und angeordnet ist, dass es das ausgewählte Öldurchflussprofil (P1, P2, P3) für das Starten anwendet.

7. Luftfahrzeug (1) nach dem vorhergehenden Anspruch, **dadurch gekennzeichnet, dass** das Ölpumpensystem (7) eine Ölpumpe (8) mit variablem Hubraum umfasst.

8. Luftfahrzeug (1) nach Anspruch 6, **dadurch gekennzeichnet, dass** das Ölpumpensystem (7) eine Ölpumpe (8) und ein Magnetventil (9) umfasst, wobei das Magnetventil (9) stromabwärts von der Ölpumpe (8) angeordnet ist und so gestaltet und angeordnet ist, dass es den gesamten oder einen Teil des Ölflusses am Ausgang der Ölpumpe (8) in einen Tank (10) umleitet.

9. Luftfahrzeug (1) nach Anspruch 6, **dadurch gekennzeichnet, dass** das Ölpumpensystem (7) eine Ölpumpe (8) und eine mechanische Entkopplungsvorrichtung (11) umfasst, die so gestaltet und angeordnet ist, dass sie die Drehung der Ölpumpe (8) aktiviert oder deaktiviert.

10. Luftfahrzeug nach Anspruch 6, **dadurch gekennzeichnet, dass** das Ölpumpensystem (7) eine Ölpumpe (8) umfasst, die durch eine rotierende elektrische Maschine (12) in ihrer Drehung unterstützt wird.

## Claims

1. A method for starting (100) an aircraft engine (2), wherein said engine (2) is coupled to a lubrication circuit (6) comprising notably an oil pump system (7), said lubrication circuit (6) being constructed and arranged to circulate oil in said engine (2), and wherein an operating mode of the engine (2) comprises a stop mode and a standby mode corresponding to a low engine speed, said method for starting (100) being **characterised in that** it includes, during a starting phase, the steps of:
- measuring (101) an oil temperature, said measurement step (101) being performed by a temperature detection device (4);
- depending on said temperature measured, compared to a threshold temperature, and depending on the operating mode of said engine, selecting (102) a starting oil flow profile (P1, P2, P3) to be applied in said engine (2) from among different startup oil flow profiles, said selection step (102) being performed by a calculator (5);
- applying (103) said starting oil flow profile (P1, P2, P3) selected by means of said oil pump system (7), said oil pump system (7) being controlled by said calculator (5).

2. The method for starting (100) an aircraft engine (2) according to claim 1, **characterised in that** each oil flow profile (P1, P2, P3) comprises a first phase (Ph1) and a second phase (Ph2), said second phase (Ph2) corresponding to a predetermined oil pressure at the engine inlet, applied when the engine speed reaches a threshold speed value (N).

3. The method for starting (100) an aircraft engine (2) according to claim 1 or 2, **characterised in that** if the oil temperature measured is below the threshold temperature and if the operating mode of the engine (2) is the stop mode, the oil flow profile (P1) comprises :
- a first phase (Ph1) during which the oil pressure at the engine (2) inlet is zero until the engine (2) speed reaches a threshold speed (N);
- a second phase (Ph2) during which the oil pressure at the engine (2) inlet is equal to a limit oil pressure value (Plim).

4. The method for starting (100) an aircraft engine (2) according to claim 1 or 2, **characterised in that** if the oil temperature measured is higher than the threshold temperature and if the operating mode of the engine (2) is the standby mode, the oil flow profile (P2) comprises :
- a first phase (Ph1) during which the oil pressure at the engine (2) inlet is equal to a limit oil pressure value (Plim) until the speed of the engine (2) reaches a threshold speed (N);
- a second phase (Ph2) during which the oil pressure at the engine (2) inlet is equal to a threshold oil pressure value (Ps), said threshold oil pressure value (Ps) being lower than said limit oil pressure value (Plim).

5. The method for starting (100) an aircraft engine (2) according to claim 1 or 2, **characterised in that** if the oil temperature measured is higher than the threshold temperature and if the operating mode of the engine (2) is the stop mode, the oil flow profile (P3) comprises :
- a first phase (Ph1) during which the oil pressure at the engine (2) inlet is increasing until the engine (2) speed reaches a threshold speed (N);
- a second phase (Ph2) during which the oil pressure at the engine (2) inlet is equal to a limit oil pressure value (Plim).

6. An aircraft (1) comprising an engine (2) whose operating mode includes a stop mode and a standby mode corresponding to a low engine speed and a temperature detection device (4) constructed and arranged to measure an oil temperature, said aircraft (1) being **characterised in that** it implements the method according to any one of claims 1 to 5 and **in that** it includes:
- a calculator (5) constructed and arranged to, depending on said temperature measured, select a starting oil flow profile (P1, P2, P3) to be applied in said engine (2) from among different startup oil flow profiles;
- a lubrication circuit (6) including an oil pump system (7), said oil pump system (7) being constructed and arranged to apply said starting oil flow profile (P1, P2, P3) selected.

7. The aircraft (1) according to the preceding claim, **characterised in that** the oil pump system (7) comprises a variable displacement oil pump (8).

8. The aircraft (1) according to claim 6, **characterised in that** the oil pump system (7) comprises an oil pump (8) and an electro-valve (9), said electro-valve (9) being located downstream of said oil pump (8) and being constructed and arranged to redirect all or part of the oil flow out of said oil pump (8) into a tank (10).

9. The aircraft (1) according to claim 6, **characterised in that** the oil pump system (7) comprises an oil pump (8) and a mechanical decoupling device (11) constructed and arranged to activate or deactivate rotation of the oil pump (8).

10. The aircraft according to claim 6, **characterised in that** the oil pump system (7) comprises an oil pump (8) rotatably assisted by a rotating electric machine (12).
